# EUROPEAN PATENT APPLICATION

(11) **EP 1 289 287 A2**
(43) Date of publication of application: **05.03.2003**
(21) Application number: 02018753.0
(22) Date of filing: 22.08.2002
(51) Int. Cl.: H04N 5/445

(54) **Search engine with an electronic program guide**

(30) Priority: 04.09.2001 GB 0121367
(71) Applicant: Pace Micro Technology PLC, Saltaire, Shipley, BD18 3LF (GB)
(72) Inventor: Matey, Jesus, Leeds LS4 2SZ (GB)
(74) Representative: Wood, Graham

(57) **Abstract**

A television system (2) is provided which includes a display screen (4) and a broadcast data receiver (BDR) (6) for receiving data from a broadcaster at a remote location and decoding said data to provide video, audio and/or auxiliary data relating to one or more channels and/or television programmes. At least part of this decoded data is used to generate an electronic programme guide (EPG) (8) for display on the display screen (4). The EPG (8) provides information relating to one or more channels and/or television programmes. A search facility is provided for use with the EPG (8) to identify channel and/or programme information relating to one or more user defined search terms.

## Description

This invention relates to a search facility for use with an electronic programme guide (EPG) of a television system.

EPGs are well known and provide information relating to television programmes and/or channels. The EPG replaces traditional programme listings in paper format and is required because of the increasing number of channels which are available for viewing with digital television systems. Such television systems typically include a display screen connected to or forming part of a broadcast data receiver (BDR). The BDR receives digital data from a broadcaster at a remote location and decodes said data to provide audio, video and/or auxiliary data. This data relates to a plurality of television programmes and channels and at least part of the video and/or auxiliary data is used by the BDR to generate the EPG for display on the display screen.

Due to the large number of channels for which the EPG provides television programme listings and information therefor, EPGs are often provided with search facilities to allow a user to more easily extract information from the large amount of information provided in the EPG. Conventional EPG search facilities categorise channels or programmes by subject matter, such as sports, movies, news, adult programmes and/or the like, and these categories are defined by the broadcaster, and displayed to the user to allow the user to see all the programmes, or those programmes which are allocated to one of the selected categories.

A problem associated with conventional search facilities is that even if the EPG identifies programmes relating to a particular subject matter group, the user is then required to switch to the identified channel and/or look for additional information relating to a specific programme to decide if the programme is likely to be of interest to them. For example, the user may be interested in watching football games where a particular team such as Leeds United is playing or a film where a particular film star is in the cast, such as Julia Roberts or Robert Redford. Conventional search facilities would typically identify which channels films or sport are being shown thereon but the user is then required to identify for themselves which of these channels are showing programs relating to the more specific information the user is interested in. For example, the user may only be interested in seeing Julia Roberts in a film which is set in the Second World War. As there are currently more than 100 possible channels in many television systems for which information can be identified by conventional search facilities, it is time consuming and frustrating for the user to switch to each identified channel in turn to find out more information relating to one or more identified programmes in order for the user to decide whether any are of interest to them.

It is therefore an aim of the present invention to provide an improved search facility for an EPG which overcomes the abovementioned problems.

According to a first aspect of the present invention there is provided a television system, said television system including a display screen and a broadcast data receiver (BDR) for receiving data from a broadcaster at a remote location and decoding said data to provide video, audio and/or auxiliary data relating to one or more channels and/or television programmes, at least part of said decoded data being used to generate an electronic programme guide (EPG) for display on the display screen, said EPG providing information relating to said one or more channels and/or television programmes and characterised in that a search facility is provided for use with said EPG, said search facility allowing the user input of search terms and, on the basis of the search terms, searching through received data to identify channel and/or programme information relating to one or more user defined search terms.

Preferably the search facility undertakes one or more searches of said channel and/or programme information on an ongoing basis.

Preferably the search facility searches channel and/or programme information continuously and/or at regular pre-determined time intervals.

The search facility is typically provided by and utilises processing means in the BDR.

In one embodiment a user query box is provided on said EPG display to allow a user to input one or more user defined search terms. These search terms can include any or any combination of key words, phrases, or specific types or features of programmes the user is interested in being informed of and/or viewing.

Preferably a plurality of keywords are selected by the user to form the basis on which the search facility undertakes searches of the channel and programme information.

In an alternative embodiment the user selects search terms by selecting pre-defined terms on an on screen display or menu(s).

Preferably the BDR has memory means, such as in the form of non-volatile random access memory (NVRAM) or a hard disk drive, and the user defined search terms are stored in the memory means.

Preferably the user defined search terms stored in the memory can be viewed using the EPG and the user can amend the terms by adding new words and/or deleting old words, thereby updating the terms as and when required.

Preferably once the search facility has identified relevant channel and/or programme information relating to the user defined search terms, the relevant information can be displayed on the display screen, either automatically or on request by the user. The relevant information typically comprises present and future events/programmes matching at least one of the user defined terms. The relevant information can be displayed as one or more lists on the display screen.

Preferably the information identified by the search facility as being relevant to the user defined search terms includes any or any combination of the name of the event (i.e., a programme), the channel, the event identifier, the start time and/or the date of showing of the event, the time period for which the identified event is shown and/or the like.

Preferably the search facility performs searches by matching the user defined search terms with the names of events/programmes and/or additional information that is carried in any or any combination of the Standard Information (SI) tables, Event Information table (EIT) descriptors, including Television On Demand (TVOD) and other on demand events. This data is typically utilised in the generation of EPG displays.

In one embodiment, once the search facility has identified one or more events matching the one or more user defined search terms, the user can then use the EPG and/or search facility to request additional information relating to the one or more identified event(s), select to tune to the event if a particular event is currently being shown, record an identified event or set a reminder if the event is to be shown in the future and/or the like. These further functions can be selected from the display window informing the user of the one or more events matching the user defined search terms.

Preferably the user enters their search terms into the EPG query box using control means, such as a keyboard, a remote control handset, voice recognition means and/or the like.

Preferably the search facility parses all the strings of data in the tables containing the names of events and any additional information for each identified event in each channel, and checks the identified events against all the user defined terms stored in the memory.

Preferably the search facility is operated by the BDR on a continuous basis or at regular intervals, even if the user is not requesting information at that time, thereby allowing identified information to be cached and updated at regular intervals.

In one embodiment the user is able to obtain updated relevant information from the search facility by pressing a pre-designated control button, such as a remote control unit button, and the latest relevant event information matching the stored user defined terms appears on demand on the display screen.

In a further embodiment, the list of matching events identified by the search facility is displayed automatically when the first event in the list is due to start. Alternatively, indication means in the form of an icon or message is displayed on the display screen to indicate to the user that an event identified in the search is due to start. The user typically pre-sets which form or forms of indication they wish to receive on their display screen using the control means.

According to a second aspect of the present invention there is provided an electronic programme guide (EPG), said EPG generated by a BDR, said BDR receiving data from a broadcaster at a remote location and decoding said data to provide video, audio and/or auxiliary data relating to one or more channels and/or television programmes, at least part of said decoded data being used to generate the electronic programme guide (EPG) for display on a display screen connected to or forming part of said BDR, said EPG providing information relating to said one or more channels and/or television programmes and characterised in that a search facility is provided for use with said EPG, said search facility allowing the user input of search terms and, on the basis of the search terms, searching through received data to identify channel and/or programme information relating to one or more user defined search terms.

According to a further aspect of the present invention there is provided a method of identifying programme and/or channel information relating to one or more user defined search terms using a search facility in a BDR, said method including the steps of the user input of one or more user defined search terms into the BDR, storing said user defined search terms in memory provided in or connected to the BDR, said search facility analysing data received by the BDR from a broadcaster at a remote location and identifying channel and/or programme information contained in said received data and relating to at least one of said user defined search terms and displaying said identified information on a display screen connected to or forming part of the BDR.

Preferably the method of searching is repeated continuously or at pre-determined intervals even if the user has not specifically requested such a search to take place. This searching is typically undertaken in the background (i.e., it is not apparent to a user that searching is being undertaken but searching is being performed during normal operation of the BDR), such that the user is unaware it is taking place.

Thus the present invention has the advantage that the user can obtain event information relating to a list of user defined terms of specific interest to the user at any time and the user is therefore less likely to miss any events of interest to them.

Embodiments of the present invention will now be described with reference to the accompanying figures, wherein:

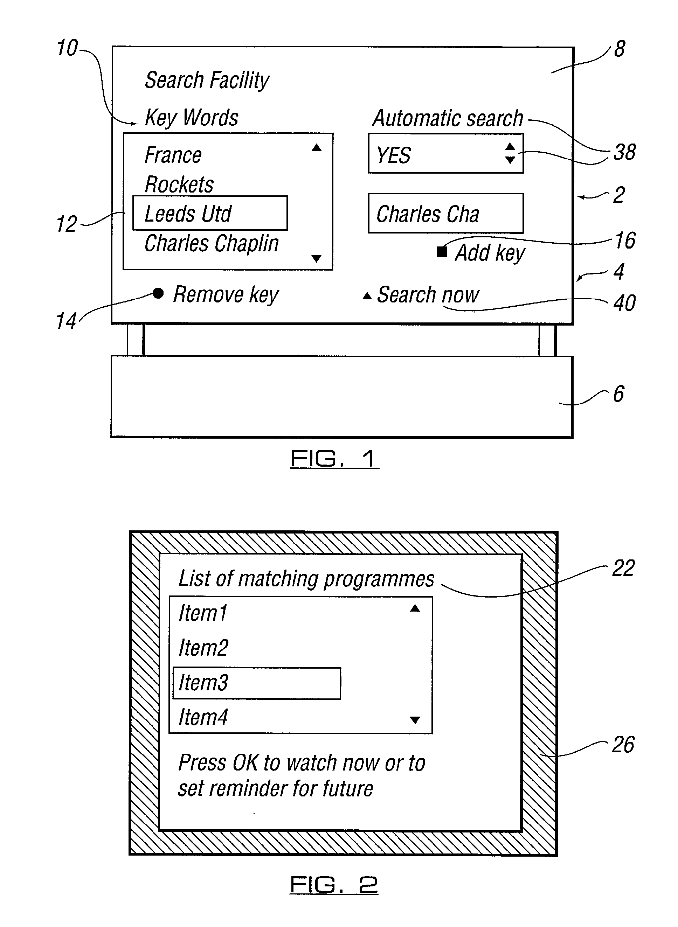

Figures 1-5 are examples of display screens according to the present invention.

Referring to Figure 1, there is illustrated a television system 2 provided with a display screen 4 connected to or integrally formed with a BDR 6. The BDR generates an EPG display 8 from received digital data for displaying channel, event and programme information on the display screen 4.

In accordance with the present invention, the EPG 8 is provided with a search engine facility, which performs searches by matching programme information against a number of user defined terms in the form of a list of keywords 10. The user inputs the list of keywords into a user query box 12 using a keyboard. This list of keywords is then stored in memory, either in NVRAM or on the hard disk of the BDR of the system.

The user can update the keyword list and can delete and/or add keywords as and when they require using delete key 14 and/or add key 16 respectively on the display screen, selected by use of equivalent buttons provided on a remote control handset.

The search engine searches performs continuously, or at regular intervals, by compiling information relating to the stored keywords, thereby allowing relevant information of interest to the user to be cached before it is requested. The search engine does this by working in the background and using programme information provided in the Service Description Table (SDT), "EIT present/future (p/f) actual" and "EIT p/f other" provided in transport streams. Information from these tables can be accessed quickly and at any time by the BDR search engine.

The information contained in the "EIT p/f schedule actual" is present in the current transport stream, so the search facility/engine can search this table, in the background. The only information that may not be ready at any time is that contained in the "EIT p/f schedule other". The search engine typically stops searching when all the events have been checked in the currently available data tables and resumes searching when new data from the broadcaster is received by the BDR to update the information tables. The latest set of search results is stored in memory of the BDR.

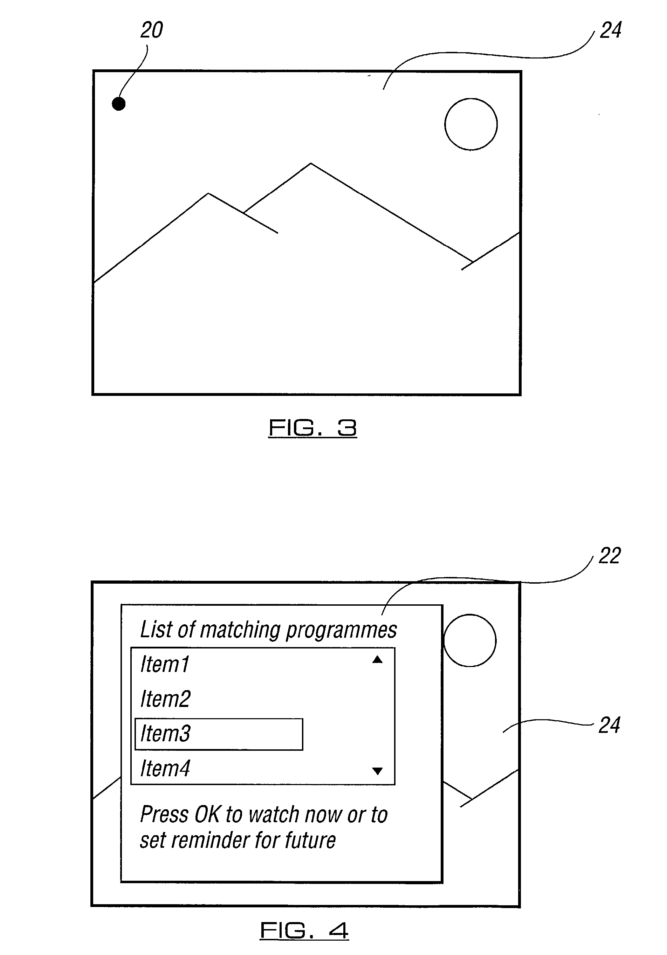

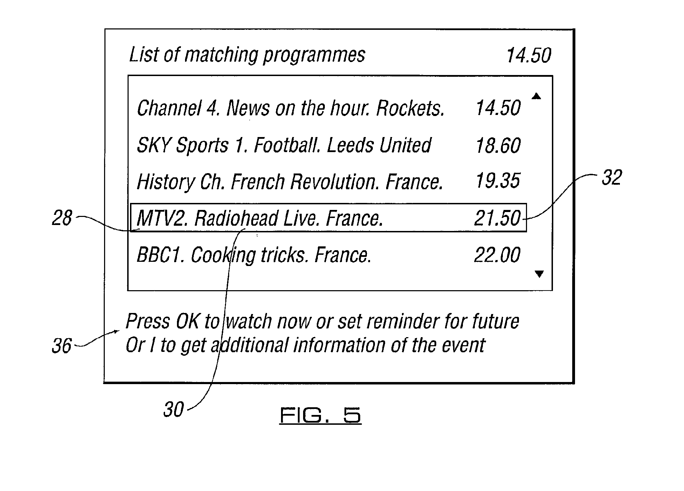

Relevant information matching the user defined keywords and identified by the search engine can be displayed on demand by the user pressing an appropriate button on the remote control unit, as shown in figure 2. Items 1-4 represent programmes matching the keywords 10. Alternatively the search engine can provide an indication to the user that a programme identified by the search engine matching the user's keywords is just about to start. This indication can be in the form of a flashing icon 20 which appears on the current on-screen display 24, as shown in Figure 3, or a pop-up window 22 containing a list of matched programmes can appear on a blank screen 26 as shown in Figure 2, or over the current on-screen display as shown in Figure 4. The user typically selects whether they want the search results to be provided via an on demand option or automatic option using the remote control handset provided with the system.

The manner in which the search engine works will now be described below in more detail. The search engine is able to work in 2 modes; a "Hard" mode where the "EIT schedule other" information is taken into account, and a "Soft" mode where this information is not processed.

In the hard mode, the BDR has to tune away from the event/programme currently being watched by the user in order to look for EPG data in other transport streams. This is the working mode used by the BDR when the user requests a list of events matching the user's keywords (i.e., having some relevance to the user's keywords) to be displayed on the display screen, as shown in Figure 2.

In the soft mode, the search engine is caching as much information as possible relating to the keywords without tuning away from the currently tuned channel. If an event matching the user's keywords is identified and is about to start, a list of matching events or warning message is displayed over the current video display, as shown in figure 4. If there is more than one identified programme being shown at that particular time, the BDR will tune to the event/programme having the most matches to the user's keywords. This is the working mode used by the BDR when the search engine is programmed to show the list of matching events automatically on the display screen, rather than following a request to do so by the user. The list of matching events displayed on the display screen contains all the matching events identified in the present/future (p/f) tables, i.e., the "now" and "next" programmes for all the channels. It also includes matching future programmes from the current transport streams (EIT schedule actual).

If the BDR is provided with two tuners, the search engine can cache information without having to tune away from the currently watched channel.

Once the user has been presented with a list of events or programmes matching their keywords, the user can choose to tune to a programme currently being shown or set a reminder for a future programme by making an appropriate selection from the programme list. Alternatively, or in addition, the user can request further information relating to a programme by pressing an "information" key which displays the long information contained in the extended-event-info-descriptor in the EIT. An example of this is shown in figure 5, where the channel name 28, the programme title 30, and the time 32 of showing of the identified programme is displayed in the list. The user is provided with a message 36 advising the user to depress the "OK" button on the remote control to select a particular programme, to set a reminder for the programme or to obtain additional information relating to the programme.

The user can select the time period over which the search engine identifies events matching the keywords, for example, the search engine can be programmed to search for events occurring that day, in the next two days and/or similar. If the search engine is using EIT schedules, only events processed for the days store in the schedule will be searched.

When the BDR is in a searching mode, the BDR processes the SDT and EIT tables and registers a callback function for each event in the table. When the callback function is executed, the BDR registers another callback for the long information for that event. Once the BDR has the title and the long information for a particular event, it parses those strings looking for the user's key words. The event is added to the events list displayed on the display screen if a match between the user's keywords and data strings occurs. This procedure is performed for all the events in the tables. The BDR controls the version number of the SDT and EIT tables processed. Every time there is a change in one of the tables, the version number of the table changes, thus informing the BDR that the list of events matching the user's keywords has to be re-built (Soft mode).

Preferably the start times identified by the search engine for near video on demand (NVOD) events will be the next time-shifted event. The channel will be set to Front Row, or whatever the name is used for NVOD services. Relevant information about NVOD events is carried in the SDT, within NVOD reference services. The search engine will parse the title of the NVOD event and the extended information, looking for the user's key words. For non-NVOD events, the required information is carried in the EIT p/f and EIT schedule tables.

When the user requests the list of matching events to be displayed on the display screen in hard mode, the video is muted and the BDR tunes to the transport stream where all the EPG data can be retrieved. If the BDR checks all the elements in the "EIT schedule other", this can be time consuming and therefore the Soft mode list can be presented in the interim while the hard mode list is being completed, thereby preventing any noticeable delay to the user in displaying the list. As the events in the list are typically displayed in chronological order, providing the soft mode list contains event entries, the user may not realise that the list is not complete, and the hard mode list is likely to have been completed by time the user scrolls to the future identified events of the soft mode list.

The Soft mode list created in the background can be built into a low priority task, to avoid degrading performance, such as channel changes and the like.

The list of identified events can include the start time and date, the name of the channel, the name of the event and the words that resulted in the match. For example, the list may contain: 4^{th} April. 20:30pm-Channel 5. Armageddon. Bruce Willis. The event identifier can also be contained in the list to allow a reminder to be set by the user and allow further information to be obtained by the user if required.

An example of the user's keyword list may be: "Leeds United", "Digital TV", "Digital Television", "Jennifer Lopez", "Breast Cancer", "U2", "Cary Grant", "Foot and Mouth". The user can select an "automatic" option 38 for a time period of "the next three days" and thus the user is informed automatically of any of the above keywords being identified in a programme in the next three days. Alternatively a button 40 is provided to allow the user to display the search results on demand as and when the user wishes to see them.

As an alternative to providing a list of matched programmes, the search engine can automatically tune into the identified channels when a matching programme identified on the channel is being shown. If more than one channel is identified, the engine can tune into each channel in turn after a pre-determined time period has passed (i.e., five seconds or more). The search engine continues to tune down the list of identified channels until the user interrupts the process by actuating a function button, thereby, for example, informing the BDR that they wish to view a particular programme.

It can be seen that the present invention allows the EPG search engine to be user definable, thereby reducing the time taken for a user to identify programme information of interest to them.

## Claims

1. A television system, said television system (2) including a display screen (4) and a broadcast data receiver (BDR) (6) for receiving data from a broadcaster at a remote location and decoding said data to provide video, audio and/or auxiliary data relating to one or more channels and/or television programmes, at least part of said decoded data being used to generate an electronic programme guide (EPG) (8) for display on the display screen (4), said EPG (8) providing information relating to said one or more channels and/or television programmes and **characterised in that** a search facility is provided for use with said EPG (8), said search facility allowing the user input of search terms and, on the basis of the search terms, searching through the received data to identify channel and/or programme information relating to one or more user defined search terms.

2. A television system according to claim 1 **characterised in that** the search facility undertakes the searches substantially continuously.

3. A television system according to claim 1 **characterised in that** the search facility undertakes the searches at pre-determined time intervals.

4. A television system according to claim 1 **characterised in that** the search facility undertakes one or more searches of said channel and/or programme information by matching the user defined search terms with the names of events, programmes and/or additional information that are carried in any or any combination of Standard Information (SI) Tables, event information descriptors, television on demand events or other demand events.

5. A television system according to claim 1 **characterised in that** a user query box (12) is provided on said EPG display (8) to allow a user to input said one or more user defined search terms into said BDR (6).

6. A television system according to claim 5 **characterised in that** the one or more user defined search terms include any or any combination of keywords, phrases, types of programmes or features of or from programmes.

7. A television system according to claim 1 **characterised in that** the one or more user defined search terms are selected by a user from a plurality of pre-defined search terms on an on screen display or menu.

8. A television system according to claim 1 **characterised in that** the one or more user defined search terms selected by a user are stored in memory means in or connected to the BDR (6).

9. A television system according to claim 9 **characterised in that** the user defined search terms stored in the memory means are capable of being viewed by the user using the EPG (8) to allow amendment thereof.

10. A television system according to claim 8 **characterised in that** the memory means is in the form of NVRAM or a hard disk drive.

11. A television system according to claim 1 **characterised in that** once the search facility has identified relevant channel and/or programme information relating to the one or more user defined search terms, the relevant information is displayed on the display screen (4) automatically or following a request by a user.

12. A television system according to claim 11 **characterised in that** the relevant information is displayed on the display screen (4) in the form of one or more lists.

13. A television system according to claim 11 **characterised in that** the relevant information displayed on the display screen (4) includes any or any combination of the name of the event(s) or programme(s) identified, the channel(s) on which the event(s) or programme(s) are identified, the event identifier, the start time and/or date of showing of the event(s) or programme(s) or the time period for which the identified event(s) or programme(s) is/are shown.

14. A television system according to claim 1 **characterised in that** once the search facility has identified relevant channel and/or programme information relating to the one or more user defined search terms, the user can select to obtain additional information relating to the identified channel and/or programmes, tune to the channel and/or programme identified, record the identified channel and/or programme or set a reminder to be informed of when the channel and/or programme identified is to be shown if this is in the future.

15. A television system according to claim 1 **characterised in that** the one or more user defined terms are selected by the user using control means.

16. A television system according to claim 15 **characterised in** the control means are any or any combination of a keyboard, a remote controlled handset or voice recognition means.

17. A television system according to a preceding claim **characterised in that** the relevant information is displayed on the display screen (4) on request by a user by depressing a pre-designated button on the remote control handset.

18. A television system according to claim 11 **characterised in that** the relevant information is displayed on the display screen (4) automatically at or shortly before the scheduled viewing time of an identified channel and/or programme.

19. A television system according to claim 1 **characterised in that** an icon (20) or message is displayed on the display screen (4) to inform the user that the search facility has identified relevant channel and/or programme information relating to the one or more user defined search terms.

20. A television system according to claim 1 **characterised in that** a user can select the time period in which the search facility is to identify events matching the user defined search term.

21. A television system according to claim 1 **characterised in that** a user is able to select the time period in which the search facility undertakes the searching therefor.

22. An electronic programme guide (EPG), said EPG generated by a BDR (6), said BDR (6) receiving data from a broadcaster at a remote location and decoding said data to provide video, audio and/or auxiliary data relating to one or more channels and/or television programmes, at least part of said decoded data being used to generate the electronic programme guide (EPG) (8) for display on a display screen connected to or forming part of said BDR (6), said EPG (8) providing information relating to said one or more channels and/or television programmes and **characterised in that** a search facility is provided for use with said EPG (8), said search facility allowing the user input of search terms and, on the basis of the search terms, searching through the received data to identify channel and/or programme information relating to one or more user defined search terms.

23. A method of identifying programme and/or channel information relating to one or more user defined search terms using a search facility in a BDR (6), said method including the steps of the user input of one or more user defined search terms into the BDR (6), storing said user defined search terms in memory provided in or connected to the BDR (6), said search facility analysing data received by the BDR (6) from a broadcaster at a remote location and identifying channel and/or programme information contained in said received data and relating to at least one of said user defined search terms and displaying said identified information on a display screen (4) connected to or forming part of the BDR.
